# FASCICULE DE BREVET EUROPEEN

(11) **EP 4 355 534 B1**
(45) Date de publication et mention de la délivrance du brevet: **26.03.2025**
(21) Numéro de dépôt: 22741334.1
(22) Date de dépôt: 14.06.2022
(51) Int. Cl.: B25J 9/00

(54) **EXOSQUELETTE DE TRONC AVEC ENSEMBLE DE COUPLAGE MÉCANIQUE D'ACTIVATION/INACTIVATION D'ASSISTANCE**
RUMPFEXOSKELETT MIT MECHANISCHER KOPPLUNGSANORDNUNG ZUR AKTIVIERUNG/DEAKTIVIERUNG VON UNTERSTÜTZUNG
TRUNK EXOSKELETON COMPRISING MECHANICAL COUPLING ASSEMBLY FOR ENABLING/DISABLING ASSISTANCE

(30) Priorité: 15.06.2021 FR 2106332
(43) Date de publication de la demande: 24.04.2024
(73) Titulaire: Human Mechanical Technologies, 65000 Tarbes (FR)
(72) Inventeur: MASSONNIER, Simon, 65000 Tarbes (FR)
(74) Mandataire: Ipside
(86) Numéro de dépôt international: PCT/FR2022/051134
(87) Numéro de publication internationale: WO 2022/263762

(56) Documents cités:
- US-A1- 2008 161 738
- US-A1- 2014 378 882
- US-B1- 7 744 552

## Description

### DOMAINE TECHNIQUE DE L'INVENTION

Le domaine de l'invention est celui des exosquelettes, c'est-à-dire des structures mécaniques qui doublent en partie le squelette humain dans le but de l'assister dans la réalisation d'une tâche ou d'une activité, telle soulèvement et le portage d'une charge, ou encore l'exécution de mouvements répétitifs.

Par le terme « charge », on entend dans le présent texte, un poids supporté par un utilisateur, c'est-à-dire le poids d'une partie de son propre corps additionné éventuellement du poids ou d'une force exercée par un ou plusieurs objets manipulés par l'utilisateur.

Plus précisément, l'invention concerne un exosquelette de tronc avec ensemble de couplage mécanique d'activation/inactivation d'assistance.

L'invention trouve notamment des applications dans le domaine de la logistique, et plus largement dans les domaines dans lesquels un utilisateur est amené à soulever des charges depuis un point bas, nécessitant de pencher le buste vers le bas, puis de le relever, ou inversement.

### ÉTAT DE LA TECHNIQUE

Il est connu de l'art antérieur des techniques d'exosquelette de tronc, permettant de soulager leur utilisateur notamment lors du levage de charges, de la manipulation d'objet situés à proximité du sol, ou encore lors de la réalisation de tâches répétitives nécessitant de se pencher et de se redresser fréquemment.

De telles activités sollicitent fortement le corps de l'utilisateur, notamment dans la région lombaire, et favorisent l'apparition de troubles musculosquelettiques (connus sous l'abréviation « TMS »), ce qui a fait naître un besoin de telles techniques d'exosquelettes de tronc.

En particulier, sont connues de techniques d'exosquelettes présentant une partie haute en liaison avec le tronc d'un utilisateur, et une partie basse en liaison avec chacun des membres inférieurs de l'utilisateur, les deux parties pivotant l'une par rapport à l'autre, le point de pivot étant généralement situé au niveau des hanches de l'utilisateur. Afin de proposer une assistance à l'utilisateur se penchant vers le bas, un couple est exercé au niveau du point de pivot, de manière active, au moyen d'un moteur par exemple, ou de manière passive par un élément de stockage d'énergie élastique, tel un ressort par exemple. Selon certaines variantes, la liaison entre la partie haute et la partie basse est réalisée par une lame flexible, qui joue à la foi le rôle d'élément de liaison et d'élément de stockage d'énergie.

Un inconvénient important des exosquelettes à assistance active est leur faible autonomie, du fait d'une capacité de stockage d'énergie, souvent électrique, limitée, ainsi que leur masse importante, du fait d'actionneurs et batteries généralement particulièrement lourds.

Un autre inconvénient majeur des techniques précitées, en particulier des techniques à assistance passive, est l'activation immédiate de l'assistance, dès que les membres inférieurs de l'utilisateur ne sont plus alignés avec son tronc. Ainsi, même lors de mouvements ou de positions ne nécessitant aucune assistance, telle la marche, l'utilisateur travaille inutilement contre l'élément élastique, résultant en une forte gêne, voir un épuisement musculaire.

Face à ces problématiques, les techniques d'exosquelettes connues ont été améliorées, en proposant des systèmes autorisant une bascule du tronc dans une plage angulaire limitée autour de la verticale, avant d'activer l'assistance lorsque l'utilisateur se penche davantage. Selon des variantes, une telle plage angulaire est réglable par l'utilisateur, en fonction de ses besoins.

Toutefois, ces techniques ne sont pas pleinement satisfaisantes, dans la mesure où elles ne différencient pas entre les mouvement nécessitant une assistance, telle une bascule du tronc vers le bas, et ceux ne nécessitant aucune assistance, telle la marche. De plus, pour autoriser une marche sans entrave, la plage angulaire d'inactivation doit être relativement importante, avec l'inconvénient qu'aucune assistance n'est possible dans cette plage quand bien même elle serait nécessitée. Le réglage de ladite plage par l'utilisateur est une solution particulièrement fastidieuse qui ne peut pas être utilisée de manière dynamique et à fréquence importante.

D'autres techniques proposent des options permettant de pallier partiellement à ces problèmes, tel le verrouillage de l'assistance lorsque celle-ci est nécessitée, et le déverrouillage lorsqu'elle n'est pas nécessitée, permettant à l'utilisateur de marcher sans que l'assistance ne s'active.

Néanmoins, ces techniques nécessitent de manipuler fréquemment l'exosquelette, ce qui a pour inconvénient d'être particulièrement fastidieux et chronophage, notamment lorsque l'utilisateur enchaîne rapidement des phases de mouvement devant être assistés et d'autres phases où l'assistance n'est pas nécessitée. De plus, le risque que l'utilisateur oublie d'effectuer le déverrouillage ou le verrouillage est importante, avec pour effet un agacement et un désintéressement de la part de l'utilisateur vis-à-vis du système.

Le document US 7744552 B1 décrit un exosquelette de tronc comportant une partie liée au tronc de l'utilisateur, des parties inférieures liées chacune à un membre inférieur de l'utilisateur, les parties inférieures et la partie supérieure étant reliées par des pivots. Les parties inférieures comprennent chacun un arbre pivotant muni d'un pas de vis extérieur, et logés dans un boitier de pivot muni d'un pas de vis intérieur, l'exosquelette comprenant par ailleurs un organe élastique interposé entre les arbres et pouvant être comprimé par ces derniers. Les pas de vis sont de sens opposé, de façon à ce que l'exosquelette soit configuré pour autoriser la marche sans assistance, et pour procurer une assistance lorsque l'utilisateur se penche.

Un besoin important auquel doit répondre un système proposant une solution aux problèmes exposés ci-dessus, est d'être facilement adaptable à tout type d'utilisateur. En particulier, il est nécessaire que la solution d'exosquelette puisse être utilisée par des utilisateurs d'âges, de genre et de morphologies différentes sans nécessiter de modifications ou de réglages importants.

Aucun des systèmes actuels ne permet de répondre simultanément à tous les besoins requis, à savoir de proposer une technique d'exosquelette de tronc qui soit légère et de conception simple, qui soit rapide et simple à revêtir pour un utilisateur en étant simplement adaptable à ce dernier, et qui procure une assistance uniquement lorsque l'utilisateur la nécessite, sans qu'il n'ait à intervenir activement.

### EXPOSÉ DE L'INVENTION

La présente invention vise à remédier à tout ou partie des inconvénients de l'état de la technique cités ci-dessus.

À cet effet, l'invention vise un exosquelette de tronc comportant :
- une partie supérieure apte à être liée au tronc d'un utilisateur de l'exosquelette,
- une paire de modules inférieurs étant aptes à être liés chacun à un membre inférieur de l'utilisateur, chaque module inférieur étant relié à la partie supérieure par un point de pivot distinct situé à hauteur des hanches de l'utilisateur,
- au moins un actionneur élastique configuré pour exercer, lorsqu'il est sous tension, un moment de force de compensation sur le tronc de l'utilisateur,
- un ensemble de couplage mécanique configuré pour :
   ▪ dans une posture de travail de l'utilisateur, entraîner une mise sous tension de l'au moins un actionneur élastique lorsque les modules inférieurs forment sensiblement un même angle non nul avec la partie supérieure, l'exosquelette procurant alors une assistance, et
      - dans une posture de marche de l'utilisateur, autoriser un libre pivotement en contre-phase des modules inférieurs, sans que l'exosquelette ne procure d'assistance,

Ainsi, l'exosquelette est constitué principalement de trois parties principales, à savoir la partie supérieure liée au tronc, et les modules inférieurs liés aux membres inférieurs, qui peuvent pivoter autour des points de pivots. On comprend qu'ainsi, ces trois parties principales doublent en partie le squelette de l'utilisateur, et sont articulées sensiblement au même niveau que le squelette de l'utilisateur, à savoir au niveau de l'articulation du bassin. On précise que la position d'un point de pivot est configurée pour être positionné par rapport à l'articulation entre le membre inférieur et la hanche de l'utilisateur, afin de gêner le moins possible la marche de l'utilisateur. Une telle position correspond généralement à un point de pivot « anatomique » entre le tronc et les membres inférieurs,

Grâce à l'actionneur élastique, un moment de force de compensation peut être exercé sur le tronc de l'utilisateur, de façon à l'assister lors d'un mouvement de tronc vers le haut, lorsqu'il relève son buste. On comprend que le moment de force de compensation s'exerce vers le « haut », c'est-à-dire qu'il a tendance à aider l'utilisateur à se relever, et permet au moins de contrer le moment exercé par l'utilisateur sur l'exosquelette, lorsqu'il soulève une charge au sol par exemple. L'actionneur élastique peut prendre des formes variées, comme cela sera vu par la suite, et travaille lorsqu'il est sous tension, étant entendu que la terminologie « sous tension » désigne un actionneur élastique sur lequel est exercé une force, que ce soit une force de traction et/ou de compression. Cet état « sous tension » s'oppose à état « détendu » de l'actionneur, dans lequel sensiblement aucune force n'est exercée sur ce dernier.

En outre, l'ensemble de couplage comporte :
- un élément de liaison couplant les modules inférieurs entre eux,
- un élément de guidage de l'élément de liaison, fixé à la partie supérieure, couplant les modules inférieurs à la partie supérieure par l'intermédiaire de l'élément de liaison,
l'élément de liaison et l'élément de guidage étant souples.

L'exosquelette peut prendre au moins deux états caractéristiques distincts, selon la posture de l'utilisateur.

Lorsque l'utilisateur est dans une posture de travail, c'est-à-dire lorsque ses membres inférieurs forment sensiblement un même angle avec son tronc, l'exosquelette est dans un état « actif ». L'énergie potentielle du déplacement du tronc de l'utilisateur vers le bas est stockée sous forme d'énergie élastique dans l'actionneur élastique. Cet effet est obtenu par la présence de l'ensemble de couplage mécanique, dont l'élément de liaison lie les modules inférieurs, étant fixé par chacune de ses extrémités à l'un des modules inférieurs, l'élément de liaison suivant lui-même la rotation de la partie supérieure, étant entraîné par l'élément de guidage solidaire de la partie supérieure. L'actionneur élastique est agencé de manière à se trouver sous tension lorsque l'élément de liaison est entrainé par l'élément de guidage, dans une posture de travail. De cette façon, l'exosquelette « détecte » une position de travail, entraînant un stockage d'énergie élastique dans le ou les actionneurs élastiques, en vue d'une restitution lorsque l'utilisateur relève son tronc.

Lorsque l'utilisateur est dans une posture de marche, c'est-à-dire lorsque ses membres inférieurs effectuent un mouvement de balancier, ou de pendule, en alternance ou encore en contre-phase, par rapport à son tronc, l'exosquelette est dans un état « inactif ». Dans cet état, l'élément de liaison peut librement se déplacer dans l'élément de guidage, ce qui en conséquence évite de tendre les organes élastiques. En effet, bien qu'un mouvement relatif existe entre la partie supérieure et un module inférieur, l'élément de liaison n'est pas entrainé par l'élément de guidage dans cette configuration car le mouvement alternant des modules inférieurs autorise son déplacement dans/sur l'élément de guidage. Puisque l'actionneur élastique est agencé de façon à se trouver sous tension lorsque l'élément de liaison est entrainé par l'élément de guidage, on comprend que lorsque l'élément de liaison n'est pas entrainé, dans une posture de marche, alors l'actionneur élastique est détendu. De cette manière, sensiblement aucune énergie cinétique (issue de la marche de l'utilisateur) n'est stockée sous forme d'énergie élastique dans l'exosquelette lors de la marche.

En résumé, les effets précités sont obtenus par le fait que l'ensemble de couplage mécanique comprenne deux éléments distincts, l'élément de liaison pouvant librement se déplacer dans l'élément de guidage, évitant toute activation de l'exosquelette lors de la marche, et l'élément de guidage entrainant l'élément de liaison lorsque le tronc est penché vers l'avant, activant ainsi l'exosquelette par mise sous tension du ou des actionneurs élastiques.

En outre, le caractère souple de l'élément de liaison et de l'élément de guidage est particulièrement avantageux en ce qui regarde l'adaptabilité de l'exosquelette à différentes morphologies d'utilisateurs, d'âge et de genre variés. En effet, le couplage mécanique entre la partie droite et gauche de l'exosquelette est généralement réalisé de façon rigide sur les exosquelettes de l'art antérieur, rendant un ajustement en largeur difficile voire impossible. Selon la présente invention, le caractère souple, également qualifiable de « flexible », de l'ensemble de couplage, permet d'adapter l'exosquelette à des tours de taille variés, sans nécessiter de réglage. En d'autres termes, l'exosquelette selon l'invention ne présente pas de largeur standard prédéfinie, mais au contraire une multitude de largeurs différentes, s'étendant jusqu'à la limite autorisée par la longueur de l'ensemble de couplage. De plus, une telle conception a pour avantage de n'encaisser aucun effort externe, au contraire d'une structure rigide qui devrait alors être dimensionnée de façon à résister aux chocs, et ce dans le temps, ce qui impliquerait que l'exosquelette soit plus encombrant et plus lourd. Enfin, une telle conception souple permet de disposer l'ensemble de couplage au plus près du corps de l'utilisateur, selon une disposition adaptée à sa morphologie, tout en évitant tout risque de heurt entre le corps de l'utilisateur et l'exosquelette.

Selon une variante préférentielle, ledit élément de liaison souple est un élément longiforme sensiblement sans capacité de déformation élastique, et dans lequel ledit élément de guidage souple est un élément longiforme sensiblement incompressible.

De cette manière, l'élément de liaison peut remplir son rôle de couplage de façon fiable, ne pouvant se déformer élastiquement lorsqu'un effort de traction est exercé sur ce dernier. En effet, il est nécessaire que l'élément de liaison puisse transmettre un effort dans un état actif, afin de mettre l'actionneur élastique sous tension, ce qui s'avérerait impossible si l'élément de liaison se déforme élastiquement de manière importante. Dans un même temps, selon une série de variantes de mise en œuvre, il est nécessaire que l'élément de guidage soit sensiblement incompressible, afin de ne pas se déformer lorsqu'un effort de traction est exercé sur l'élément de liaison, ce qui aurait également pour effet qu'il soit impossible mettre l'actionneur élastique sous tension dans un état actif.

De plus, le caractère longiforme et souple de l'élément de liaison permet de relier les deux côtés de l'exosquelette selon un tracé choisi avantageusement, tel par exemple en arc de cercle dans le dos de l'utilisateur. Un tel élément peut également se déplacer simplement et sans contrainte dans un élément de guidage correspondant, qui définit le tracé suivi par l'élément de liaison.

Selon une variante avantageuse, ledit élément de liaison souple est un câble, et l'élément de guidage souple est une gaine de diamètre adapté pour accueillir ledit câble

De cette manière, l'ensemble de couplage mécanique est constitué de manière particulièrement simple, par l'utilisation de composants disponibles couramment dans le commerce, permettant de limiter le coût de fabrication et de réparation de l'exosquelette. Une gaine standard est par exemple composée d'une gaine extérieure en plastique qui sert de protection, et d'une gaine constituée d'un fil d'acier en spirale qui garantit l'incompressibilité tout préservant une certaine souplesse et flexibilité. En effet, un élément de guidage trop élastique aurait pour effet de se comprimer lorsque l'élément de liaison subit une traction, ce qui ne permettrait pas à l'ensemble de couplage de jouer son rôle tel que décrit précédemment. En ce qui concerne l'élément de liaison, l'utilisation d'un câble standard, par exemple métallique, de type « Bowden » est une option préférentielle, présentant une résistance importante et étant flexible tout en restant sensiblement sans capacité de déformation élastique.

Toutefois, d'autres variantes sont envisageables, tel un élément de liaison réalisé par une bande souple, chaîne, etc. L'élément de guidage peut quant à lui également être un élément rigide ayant une forme prédéfinie, selon une variante.

Selon une variante particulière, la partie supérieure comprend une paire de mâts de support, chaque mât de support comportant sur une extrémité inférieure un point de fixation dudit élément de guidage, et étant relié audit point de pivot correspondant au niveau de ladite extrémité inférieure, et comportant au niveau d'une extrémité supérieure un moyen de liaison au tronc de l'utilisateur

Ainsi, la partie supérieure est constituée à partir d'éléments particulièrement simples, permettant principalement d'appliquer le moment de force de compensation au tronc de l'utilisateur. En particulier, les mâts peuvent prendre la forme de tiges, tubes, lames ou tout autre élément longiforme adapté. Il est possible de prévoir des mâts de support réglables en longueur, au moyen de tiges insérées et réglables dans des tubes formant la partie basse de la partie supérieure, de manière à rendre l'exosquelette adaptable à différentes morphologies de troncs. Préférentiellement, les mâts de support sont en métal, ou plastique, ou matériau composite, ou tout autre matériau adapté.

Plus particulièrement, dans le cadre d'un premier mode de réalisation, l'extrémité inférieure peut être coudée de façon à former un bras sensiblement transversal, et le point de fixation dudit élément de guidage se situant sur ledit bras sensiblement transversal, le mât étant relié audit point de pivot au niveau dudit coude de l'extrémité inférieure.

Selon une variante, le coude de l'extrémité inférieure comporte une chape orientée vers le module inférieur correspondant et accueillant un axe formant ledit point de pivot, ladite bielle et ladite tige de support du module inférieur étant enfilés sur ledit axe. On comprend que le mât de support d'un module supérieur peut être réalisé à partir d'une pluralité de pièces, notamment au niveau de l'extrémité coudée.

De cette manière, on obtient un agencement particulièrement compact de l'exosquelette, toutes les pièces mobiles en rotation essentielles au fonctionnement de l'exosquelette étant pivotantes autour d'un même axe. Une telle conception est de plus particulièrement avantageuse en ce qui concerne le montage de l'exosquelette, puisque la fixation des pièces autour dudit axe constitue quasiment la seule étape importante de montage de l'exosquelette.

Selon une variante avantageuse, l'exosquelette comporte une ceinture pelvienne fixée au niveau desdits points de pivots.

Une telle ceinture permet un maintien en position de l'exosquelette sur l'utilisateur, et permet de centrer les points de pivots autour du point de pivot anatomique du tronc de l'utilisateur, de façon à ce que le moment de compensation soit exercé de façon optimale. Il est possible d'envisager également toute variante formant un point d'appui au niveau du bassin ou du fessier de l'utilisateur, afin de « centrer » l'exosquelette autour du point de pivot anatomique situé au niveau des hanches de l'utilisateur. Avantageusement, une telle ceinture est en matière textile, conférant de la souplesse à l'ensemble, réglable en circonférence, et peut être rembourrée pour plus de confort.

Selon une variante, la partie supérieure est formée de deux modules supérieurs indépendants couplés par ledit élément de guidage.

Un avantage important d'une telle conception, en combinaison avec le caractère souple de l'ensemble de couplage, est d'obtenir un exosquelette composé de deux parties sensiblement symétriques, reliées par des éléments souples. On comprend qu'ainsi, l'exosquelette s'adapte parfaitement en largeur à des morphologies différentes d'utilisateurs, sans nécessiter de réglage, les éléments de liaison et de guidage s'adaptant naturellement à la largeur de par leur caractère souple. Dans une telle variante, les deux moitiés de l'exosquelette sont avantageusement, mais non impérativement, reliées par d'autres éléments souples telle une ceinture pelvienne et/ou un harnais de tronc pour un meilleur positionnement de l'exosquelette sur l'utilisateur. Enfin, une conception en deux modules de la partie supérieure améliore le comportement en torsion de l'exosquelette, l'utilisateur ne ressentant ainsi aucune gêne par l'exosquelette lors de ses mouvements de torsion du tronc, les moitiés gauche et droite n'étant pas reliées rigidement l'une à l'autre.

De plus, un tel arrangement permet de concevoir l'exosquelette sous la forme de deux parties, droite et gauche, globalement longiformes. L'exosquelette est ainsi réalisé principalement à partir de quatre modules, formés préférentiellement chacun à partir d'élément longiformes, ce qui résulte en un très faible encombrement lorsque l'exosquelette est rangé ou transporté.

Selon une variante complémentaire, lesdits modules supérieurs sont liés au tronc de l'utilisateur au moyen d'un harnais reliant les modules supérieurs indépendants, le harnais étant en forme de U dont les branches reposent sur les épaules de l'utilisateur et sont reliées dans le dos de l'utilisateur.

Un tel harnais permet de relier les deux modules supérieurs tout en liant la partie supérieure de l'exosquelette au tronc de l'utilisateur, en étant peu encombrant pour l'utilisateur. Le harnais est avantageusement muni d'éléments d'ajustement, tel des boucles, ce qui permet à l'exosquelette de s'adapter en largeur à différentes morphologies. Avantageusement, un tel harnais est en matière textile, conférant de la souplesse à l'ensemble, et peut être rembourré pour plus de confort. Un tel harnais est particulièrement avantageux dans une conception de la partie supérieure impliquant deux modules supérieurs, toutefois il convient de noter qu'un tel harnais peut également être utilisé dans le cadre d'une partie supérieure réalisée en une seule partie.

Selon un mode de réalisation particulier, chaque module inférieur comportant un actionneur élastique, et chaque module inférieur comprend
- un mât de support relié par une extrémité supérieure audit point de pivot, et comportant au niveau d'une extrémité inférieure un moyen de liaison à un membre inférieur de l'utilisateur,
- un élément de bras de levier monté pivotant sur ledit point de pivot par une première extrémité, et dont une seconde extrémité est reliée à l'élément de liaison, et
ledit actionneur élastique d'un module inférieur est un organe sollicité en traction, s'étendant entre la seconde extrémité de l'élément de bras de levier et l'extrémité inférieure dudit mât de support du module inférieur

De cette manière, chaque module inférieur est constitué astucieusement de trois élément simples, liés d'une part au membre inférieur de l'utilisateur, et d'autre part au point de pivot. Dans une telle structure, le mât de support joue le rôle d'un élément qui double le squelette de l'utilisateur, le mât suivant sensiblement la cuisse du membre inférieur de l'utilisateur. Le mât de support est par exemple une tige métallique, plastique, composite, etc. sensiblement indéformable et rigide, de façon à ne pas se déformer lorsque l'actionneur élastique est tendu. On comprend que dans un tel mode de réalisation, les mâts de supports de la partie supérieure transmettent le moment de force de compensation à l'utilisateur et sont donc relativement rigides, de façon à ne pas se déformer sous l'effet des moments s'appliquant dessus.

Dans un tel mode de réalisation, l'élément de liaison est lié aux éléments de bras de levier, qui sont eux-mêmes liés à l'actionneur élastique. Lorsque dans un état actif, l'élément de liaison est entraîné par l'élément de guidage, entraînant en conséquence l'élément de bras de levier en rotation, l'actionneur élastique sollicité en traction se tend et stocke de l'énergie élastique. On comprend également que dans l'état inactif, les éléments de bras de levier peuvent pivoter librement en contre-phase, à l'instar des modules inférieurs par rapport à la partie supérieure, n'entrainant aucune mise sous tension de l'actionneur élastique.

Selon une variante de ce mode de réalisation, l'organe élastique d'un module inférieur est choisi parmi : un câble élastique, une sangle élastique, un ressort hélicoïdal, un ressort à gaz, un ressort hydraulique.

Selon une variante préférentielle, l'organe élastique est un câble ou une sangle élastique comportant une âme élastique, préférentiellement en caoutchouc, et une gaine de protection, préférentiellement en matériau tissé possédant une capacité de déformation.

Ainsi, il est possible de stocker l'énergie potentielle sous forme d'énergie élastique dans un élément particulièrement simple, disponible couramment dans le commerce, peu couteux et qui peut être remplacé aisément en cas d'usure. Un tel câble peut par exemple être trouvé sous l'appellation de sangle/câble « Sandow ».

Selon un autre mode de réalisation particulier, l'exosquelette comporte deux actionneurs élastiques, dans lequel
- chaque module inférieur comprend un mât de support reliée par une extrémité supérieure audit point de pivot, et comportant au niveau d'une extrémité inférieure un moyen de liaison à un membre inférieur de l'utilisateur,
- chaque extrémité de l'élément de liaison relie directement le mât de support d'un module inférieur,
et dans lequel chaque couple de mât de support de module inférieur - mât de support de module supérieur forme un actionneur élastique sollicité en flexion dans ladite posture de travail.

Selon une variante particulière, lesdits mâts de support des modules inférieurs et supérieurs sont des tiges flexibles en matériau composite.

Ainsi, ce mode de réalisation alternatif permet de réaliser l'au moins un actionneur élastique directement à partir des mâts de support d'un module inférieur et d'un module supérieur liés par un point de pivot. En d'autres termes, les mâts de supports jouent ont une double fonction d'élément de soutien structurel et d'actionneur élastique. On comprend que dans un tel cas, les mâts de support sont déformables élastiquement, et présentent un module de flexion choisi pour exercer une force de rappel satisfaisante sur le tronc de l'utilisateur. Cette force génère un moment de force de compensation autour du bassin de l'utilisateur. Afin de réaliser cette fonction, les mâts de support peuvent par exemple être des tiges flexibles en matériau composite tel de la fibre de verre, ou tout autre matériau permettant d'obtenir le comportement souhaité.

En d'autres termes, les mâts de support d'un module inférieur et d'un module supérieur forment ensemble un actionneur élastique sollicité en flexion, à l'image d'un ressort à lame.

Le rôle joué par l'ensemble de couplage est ici identique à celui joué dans le mode de réalisation présenté plus en amont, le libre pivotement en contre-phase dans une posture de marche « séparant » l'actionneur élastique en deux parties (reliées par le point de pivot), laissant ce dernier sensiblement détendu. L'entraînement de l'élément de liaison par l'élément de guidage dans une posture de travail « verrouille » les mâts de support, qui se retrouvent sensiblement alignés, et forment un actionneur élastique se comportant comme une seule pièce, c'est-à-dire comme un ressort de type ressort à lame.

On comprend que dans un tel mode de réalisation alternatif, l'ensemble de couplage n'est que légèrement modifié, en ce qui concerne ses points de fixations sur les modules inférieurs, le principe de fonctionnement n'étant toutefois pas changé. Seul l'actionneur élastique est réalisé de manière différente et particulièrement astucieuse, de par la double fonction des mâts de support. Un tel mode de réalisation présente également des avantages importants en termes de simplicité de conception, de montage, et en termes de réduction de coûts.

Selon une variante avantageuse, l'exosquelette comporte en outre un dispositif de débrayage, configuré pour coupler/découpler un module inférieur de l'ensemble de couplage mécanique.

Grâce à un tel dispositif, il est possible d'inactiver totalement l'exosquelette lorsque cela est souhaité par l'utilisateur. Dans un tel état, l'utilisateur peut prendre des postures telle la position assise sans être entravé dans ses mouvements.

Selon un mode de réalisation particulier, ledit dispositif de débrayage comporte
- une biellette agencée pivotante sur ledit module inférieur, ladite biellette étant reliée à l'élément de liaison, et
- un loquet de débrayage, permettant de bloquer ou débloquer le pivotement de ladite biellette par rapport au module inférieur,
de manière à coupler ou découpler ledit ensemble de couplage mécanique dudit module inférieur.

Ainsi, on obtient un dispositif de débrayage peu encombrant, intégré de manière astucieuse au module inférieur.

Dans le cadre du premier mode de réalisation alternatif impliquant un bras de levier sur le module inférieur, la biellette est avantageusement agencée pivotante sur le bras de levier. Dans ce cas, le dispositif de débrayage peut être prémonté sur l'élément de bras levier, ce qui a pour effet de ne pas augmenter la complexité de montage de l'exosquelette dans sa globalité.

Dans le cadre du deuxième mode de réalisation alternatif impliquant un actionneur élastique formé par les mâts de supports, la biellette peut être arrangée pivotante sur l'extrémité supérieure du mât de support du module inférieur, de manière à saillir transversalement dudit mât, et pouvant être verrouillée dans une position saillante dans l'état actif, dans une posture de travail.

Selon un autre mode de réalisation distincts des modes de réalisations précités, l'élément de guidage est compressible, et forme un actionneur élastique sollicité en compression dans ladite posture de travail.

Dans un tel mode de réalisation, c'est l'élément de guidage qui joue un double rôle de guidage de l'élément de liaison et d'actionneur élastique, permettant de simplifier l'exosquelette et de réduire les coûts de fabrication.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- [Fig.1] est une vue schématique en perspective d'un premier mode de réalisation de l'exosquelette, porté par un utilisateur, ce dernier étant dans une position inactive, l'exosquelette ne procurant aucune assistance,
- [Fig.2] est une vue schématique en perspective de l'exosquelette de la [Fig.1], porté par un utilisateur, ce dernier étant dans une position de travail, l'exosquelette procurant une assistance, étant dans un état « actif »
- [Fig.3] est une vue schématique en perspective de l'exosquelette de la [Fig.1], porté par un utilisateur, ce dernier étant dans une position de marche, l'exosquelette ne procurant aucune assistance, étant dans un état « inactif »,
- [Fig.4] est une vue schématique des modules gauches et les modules droits côte à côte, dans un plan sagittal de l'exosquelette, dans un état actif sur la représentation (a) et dans un état inactif sur la représentation (b),
- [Fig.5] est une vue schématique du côté droit de l'exosquelette, l'ensemble de couplage étant représenté partiellement,
- [Fig.6] est une vue arrière schématique de l'exosquelette, dans un état inactif sur les représentations (a)-(c), l'utilisateur étant dans une posture de marche, et dans un état inactif sur les représentations (d)-(f), l'utilisateur étant dans une posture de travail,
- [Fig.7] est une vue de détail en perspective du côté droit de l'exosquelette,

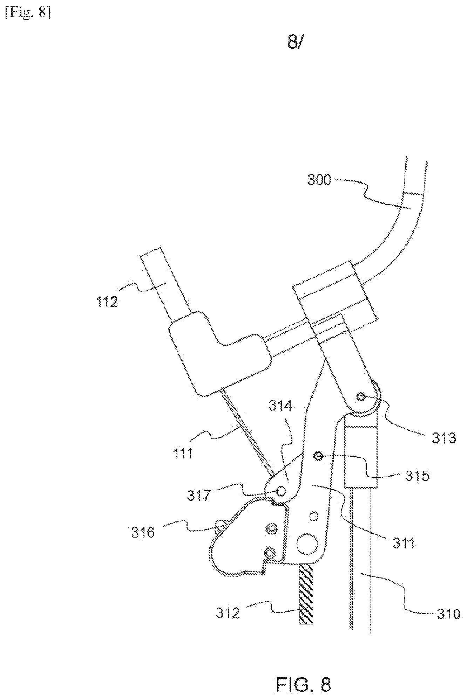

- [Fig.8] est une vue de détail de côté du côté droit de l'exosquelette,
- [Fig.9] est une vue de détail de côté du côté droit de l'exosquelette, selon une coupe laissant apparaître le dispositif de débrayage
- [Fig.10] est une vue de détail en perspective de l'élément de bras de levier, dont certains éléments ont été masqués pour laisser apparaitre le dispositif de débrayage.
- [Fig.11] est une vue schématique en perspective d'un deuxième mode de réalisation de l'exosquelette, porté par un utilisateur, ce dernier étant dans une position inactive, l'exosquelette ne procurant aucune assistance,
- [Fig.12] est une vue schématique en perspective de l'exosquelette de la [Fig.11], porté par un utilisateur, ce dernier étant dans une position de travail, l'exosquelette procurant une assistance, étant dans un état « actif »
- [Fig.13] est une vue schématique en perspective de l'exosquelette de la [Fig.11], porté par un utilisateur, ce dernier étant dans une position de marche, l'exosquelette ne procurant aucune assistance, étant dans un état « inactif »,

### DESCRIPTION DÉTAILLÉE DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

### Exemple d'un premier mode de réalisation particulier

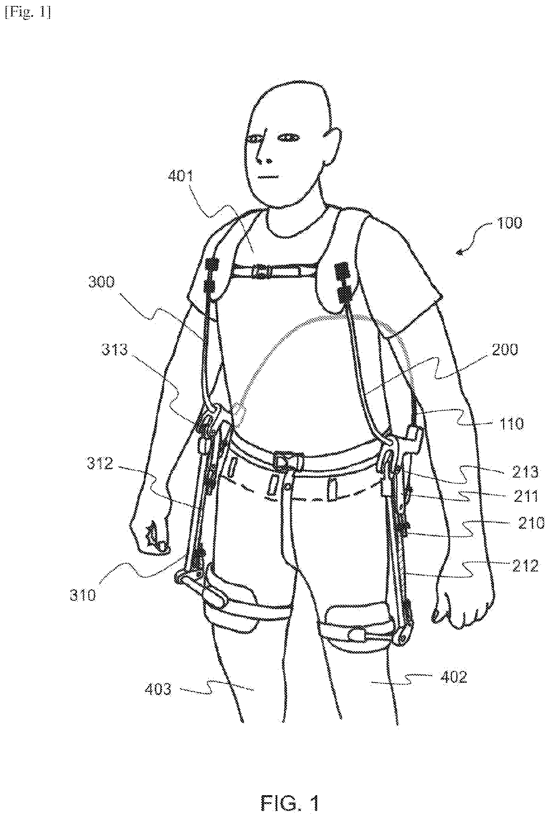

La [Fig.1] représente un utilisateur portant un exosquelette 100 de tronc selon un premier mode de réalisation, dans un état de repos, dans lequel l'exosquelette est dans un état « inactif » et ne procure aucune assistance à l'utilisateur.

L'exosquelette 100 de tronc est sensiblement symétrique par rapport au plan sagittal de l'utilisateur (correspondant à un plan sagittal de l'exosquelette 100), et présente une partie gauche comportant un module supérieur 200 et un module inférieur 210, et une partie droite comportant un module supérieur 300 et un module inférieur 310. Les modules supérieurs sont liés au tronc 401 de l'utilisateur, tandis que les modules inférieurs sont respectivement liés à un membre inférieur 402, respectivement 403, de l'utilisateur. Les modules supérieurs 200 et 300 forment une partie supérieure suivant globalement la même orientation, à savoir celle du tronc 401, et peuvent également être envisagées en conception monobloc.

Pour chaque partie gauche et droite, les modules supérieurs 200, respectivement 300, sont reliés aux modules inférieurs 210. respectivement 310, par une liaison pivot autour d'un point de pivot 213, respectivement 313, situé sensiblement au niveau des hanches de l'utilisateur. En d'autres termes, les points de pivots 213 et 313 de la partie gauche et droite sont situés sur un axe transversal de l'utilisateur, correspondant à l'axe autour duquel le tronc 401 pivote lorsque l'utilisateur bascule ce dernier.

De plus, les parties droite et gauche de l'exosquelette sont reliées entre elles par l'intermédiaire d'un élément de liaison transversal, tel une ceinture pelvienne décrite plus bas, de façon à centrer l'exosquelette au niveau du point de pivot anatomique du tronc 401 avec les membres inférieurs 402 et 403.

L'exosquelette 100 est configuré de sorte à procurer une assistance à l'utilisateur lorsque celui-ci bascule son tronc 401 vers l'avant, en fournissant un moment de force de compensation dirigé à l'encontre du mouvement de bascule vers l'avant, ledit moment s'exerçant sur le tronc de l'utilisateur, autour des points de pivots 213 et 313.

La cinématique décrite ci-avant permet de définir plusieurs positions relatives entre les modules de l'exosquelette 100.

Tout d'abord, les modules supérieurs 200 et 300 suivent les mouvements du tronc 401 de l'utilisateur, et sont ainsi en tout temps sensiblement parallèles, et ne forment pas d'angle entre eux dans un plan sagittal de l'exosquelette 100.

Les modules inférieurs 210 et 310 sont respectivement liés à un membre inférieur 402, 403 de l'utilisateur. Ainsi, les modules inférieurs 210 et 310 peuvent non seulement former un angle avec le tronc 401, mais également former un angle entre eux, dans un plan sagittal de l'exosquelette.

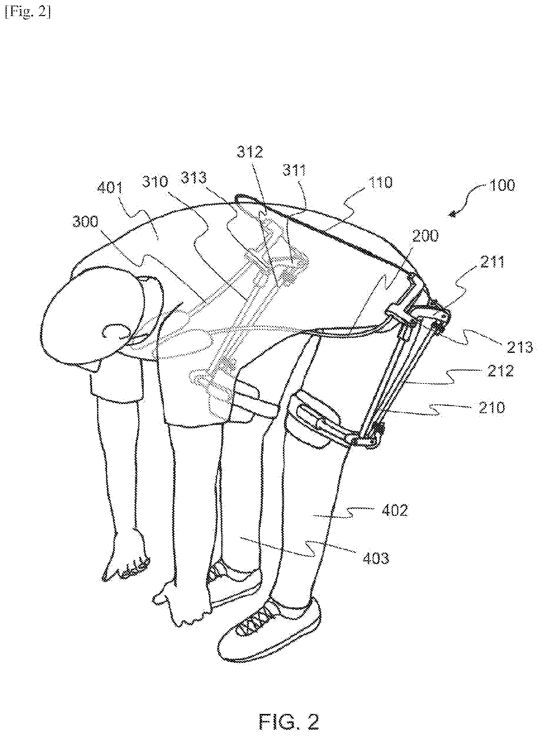

La [Fig.2] illustre une position de l'utilisateur dans laquelle les modules inférieurs 210 et 310 forment sensiblement un même angle avec le tronc 401, dans un plan sagittal. Cette position correspond à une position dans laquelle l'utilisateur soulève un objet au sol, par exemple, et dans laquelle une assistance est procurée.

Il est ici fait remarquer que la notion de « sensiblement même angle » couvre des angles entre les modules inférieurs et le tronc même légèrement différents, En d'autres termes, il existe une tolérance sur la posture de travail, un décalage entre les modules inférieurs étant toléré même pour une utilisation optimale de l'exosquelette. De même, la notion de contre-phase comprend une plage de tolérance, pouvant être plus ou moins importante, dans laquelle l'exosquelette ne procure pas, ou très peu, d'assistance. De plus, en tout état de cause, l'exosquelette est fonctionnel dans toutes les positions qui ne sont pas des positions caractéristiques de la posture de travail ou de marche, avec toutefois une assistance pouvant être moins optimale.

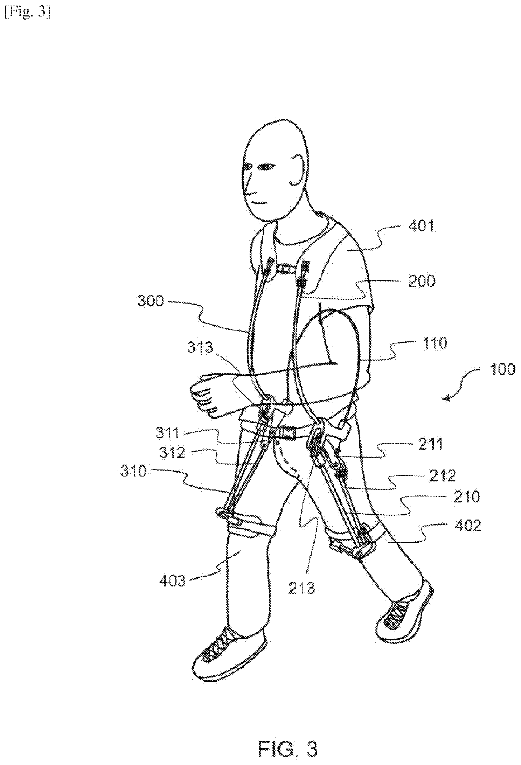

La [Fig.3] illustre une position de l'utilisateur dans laquelle les modules inférieurs 210 et 310 forment avec le tronc 401 des angles opposés, dans un plan sagittal. Cette position correspond à une position dans laquelle l'utilisateur marche, et dans laquelle aucune assistance n'est procurée. Une telle position correspond également à une situation dans laquelle les modules inférieurs 210 et 310 pivotent en contre-phase, selon un mouvement de pendule ou selon un mouvement de bascule alternant.

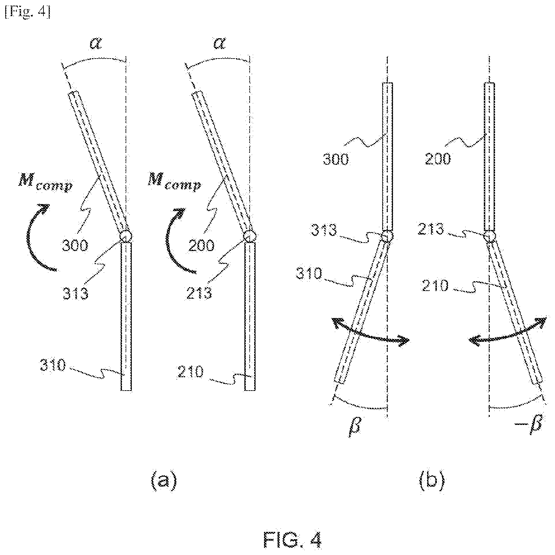

La figure 4 représente schématiquement les modules gauches et les modules droits côte à côte, dans un plan sagittal de l'exosquelette 100. Sur la représentation (a), correspondant à la position de la figure 2, les modules supérieur 200 et inférieur 210 du côté gauche, et les modules supérieur 300 et inférieur 310 du côté droit, forment sensiblement un même angle α entre eux. La représentation (b) correspond à une vue instantanée d'un pivotement relatif en contre-phase des modules supérieur 200 et inférieur 210, et des modules supérieur 300 et inférieur 310. Un tel pivotement en contre-phase (illustré par les doubles flèches en gras) correspond à une situation de marche de l'utilisateur, lorsque les membres inférieurs 402 et 403 basculent en contre-phase autour du tronc 401 de l'utilisateur, tel qu'illustré sur la figure 3. Selon un autre point de vue, cet état peut être défini par le fait que les modules supérieur 300 et inférieur 310 du côté droit forment un angle orienté obtus *β* entre eux, et les modules supérieur 200 et inférieur 210 du côté gauche forment un angle orienté obtus - *β* entre eux. En d'autres termes, les angles orientés formés sont opposés, c'est-à-dire de même module mais de signe opposé. Lors du mouvement de pivotement, la valeur de l'angle varie, mais reste sensiblement identique pour les modules droit et gauche, le signe alternant. Il est utile de faire remarquer que, généralement, les modules supérieurs sont sensiblement verticaux lorsque les modules inférieurs pivotent en contre-phase, correspondant à la position naturelle de marche de l'utilisateur.

En résumé, dans la position de la représentation (a), correspondant à un état actif de l'exosquelette, un moment de force de compensation *M_{comp}* est appliqué sur les modules supérieurs, tandis que dans la position (dynamique) de la représentation (b), correspondant à un état inactif de l'exosquelette, sensiblement aucun moment de force n'est exercé sur les modules supérieurs. Bien entendu, lorsque les modules inférieurs et supérieurs sont sensiblement alignés, c'est-à-dire lorsque l'utilisateur ne marche pas, mais ne se baisse pas non plus, l'exosquelette est également inactif.

Ce fonctionnement de l'exosquelette 100 est obtenu par le fait que chaque module inférieur 210 et 310 comporte un élément de bras de levier 211, respectivement 311, et un organe élastique 212, respectivement 312, ainsi que par le fait que l'exosquelette 100 comporte un élément de couplage mécanique 110, reliant les modules inférieurs et supérieurs, droits et gauches.

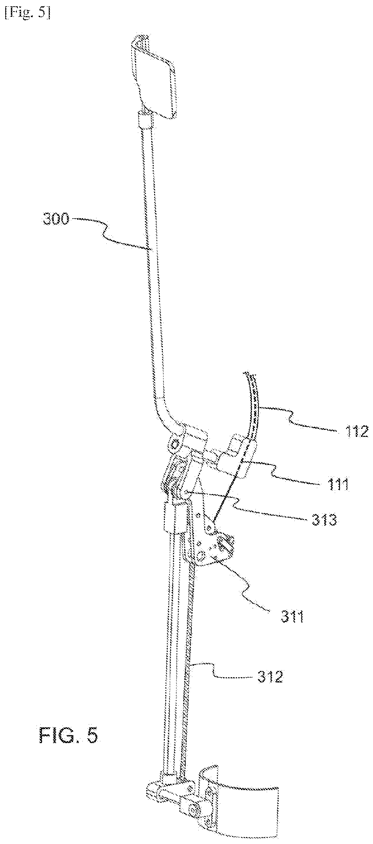

Par la suite, on se réfèrera aux modules supérieur droit 300 et inférieur droit 310, illustrés à la [Fig.5], étant entendu que les mêmes observations s'appliquent aux modules supérieur gauche 200 et inférieur gauche 210.

Plus précisément, l'élément de bras de levier 311 est lié au module inférieur 310 par une liaison pivot autour du point de pivot 313, de manière à ce qu'il puisse pivoter librement par rapport au module inférieur 310.

En particulier, le module inférieur 310 est comporte une structure de soutien sous la forme d'une tige de support, formant mât de support, reliée par une extrémité supérieure au point de pivot 313, et comportant au niveau d'une extrémité inférieure un moyen de liaison au membre inférieur 403 de l'utilisateur,

En particulier, l'élément de bras de levier 311 est une bielle comportant deux extrémités, fixée au point de pivot 313 par une première extrémité. A titre d'exemple, la première extrémité de la bielle peut comporter une chape, dans laquelle vient se placer la tige de support du module inférieur 310.

Dans ce mode de réalisation, l'actionneur élastique est un organe élastique 312 s'étendant entre une extrémité inférieure à laquelle est liée le membre inférieur de l'utilisateur, et la bielle formant l'élément de bras de levier 311, en particulier au niveau d'une seconde extrémité de ladite bielle.

On comprend de par cet agencement, que lorsque l'élément de bras de levier 311 pivote en éloignement du membre inférieur 403 de l'utilisateur, l'organe élastique est tendu. De cette manière, dans l'état actif de l'exosquelette, grâce à une force de rappel élastique, un moment de force de compensation autour du point de pivot 313 est exercé. Ce moment de force de compensation a tendance à faire pivoter l'élément de bras de levier vers le membre inférieur 403, ce qui, pour des raisons qui seront vues ci-après, a tendance à apporter une assistance à l'utilisateur qui bascule son tronc 401 vers l'avant.

Le module supérieur droit 300 est, par exemple, composé d'une tige de support 301 formant mât de support, s'étendant le long du tronc de l'utilisateur, qui comporte une extrémité inférieure coudée. L'extrémité inférieure coudée forme un bras sensiblement transversal, formant ici également un bras de levier, sur lequel peut être exercé une force provoquant un moment tendant à faire redresser l'utilisateur lorsque l'exosquelette 100 est en utilisation. La tige de support 301 est reliée au point de pivot 313 au niveau du coude de l'extrémité inférieure, et comporte au niveau d'une extrémité supérieure un moyen de liaison au tronc 401 de l'utilisateur. Par exemple, l'extrémité inférieure comporte une chape orientée vers le module inférieur 310 correspondant, qui accueille un axe formant le point de pivot 313, la bielle formant bras de levier 311 et la tige de support du module inférieur 310 étant enfilés sur ledit axe.

On comprend que par cet agencement, le module supérieur 300 et le module inférieur 310 peuvent pivoter librement l'un par rapport à l'autre autour du point de pivot 313, et que l'élément de bras de levier 311 peut pivoter librement autour de ce même point, par rapport aux deux modules (étant entendu que le pivotement en éloignement du membre inférieur 403 est limité par l'organe élastique 132)

Le comportement de l'exosquelette 100 exposé plus en amont est en grande partie obtenu par la présence de l'ensemble de couplage mécanique 110, qui lie les modules inférieurs 210 et 310 entre eux, et les lie également aux modules supérieurs 200 et 300.

En particulier, la liaison mécanique entre les modules inférieurs 210 et 310 est réalisée au moyen d'un élément de liaison 111 longiforme, souple, sensiblement sans capacité de déformation élastique, qui relie les extrémités des éléments de bras de levier 211 et 311, qui sont opposées aux points de pivots 213 et 313. Un tel élément de liaison 111 est par exemple un câble en acier, de type « Bowden ».

Ainsi, lorsqu'une traction est exercée sur l'élément de liaison 111, les éléments de bras de levier 211 et 311 ont tendance à pivoter et à tendre les organes élastiques 212 et 312. On comprend que plus le point d'attache de l'élément de liaison 111 est éloigné des points de pivot 213 et 313, plus le bras de levier est long, et plus les organes élastiques 212 et 312 pourront être tendus. En retour, cela veut dire qu'à force de rappel exercée par l'organe élastique 212 et 312 égale, une traction sur l'élément de liaison 111 moins forte est nécessaire, plus le bras de levier est important, ce qui se traduit par une durée de vie accrue de l'exosquelette.

La liaison des modules inférieurs 210 et 310 aux modules supérieurs 200 et 300 est réalisée par l'intermédiaire d'un élément de guidage 112 de l'élément de liaison 111. L'élément de guidage 112 vise à coupler les deux modules supérieurs aux deux modules inférieurs. De cette manière, l'ensemble de couplage mécanique 110 couple à la fois les modules inférieurs entre eux par l'intermédiaire de l'élément de liaison 111, et les modules inférieurs aux modules supérieurs par l'intermédiaire de l'élément de guidage 112. En d'autres termes, l'élément de liaison 111 et l'élément de guidage 112 relient chacun les modules inférieurs, respectivement supérieurs, mais ne sont pas directement liés entre eux. toutefois l'élément de guidage 112 contraint l'élément de liaison 111 dans ses déplacements, l'obligeant à se déplacer longitudinalement dans l'élément de guidage 112.

Ainsi, la combinaison de la liaison mécanique des modules inférieurs entre eux par l'élément de liaison 111 et le guidage de ce dernier dans l'élément de guidage 112 limite la libre rotation des éléments de bras de levier 211 et 311. En effet, le déplacement de l'élément de bras de levier gauche 211 entraîne le déplacement de l'élément de bras de levier droit 311, et inversement. Ainsi, les éléments de bras de levier 211 et 311 peuvent pivoter en contre-phase librement. En particulier, lorsque l'élément de liaison 111 est un câble, de longueur constante de par son absence de capacité de déformation élastique, la distance séparant les deux extrémités d'élément de bras de levier 211 et 311 le long du tracé du câble reste identique pour des raisons mécaniques. L'élément de guidage 112 assure que l'élément de liaison 111 suive globalement le même tracé en toute circonstances, et évite toute déformation incontrôlée de ce dernier. A cette fin, il est utile de préciser que l'élément de guidage 112 possède une certaine incompressibilité, de manière à ne pas se laisser déformer sous l'action de l'élément de liaison 111 qui le traverse.

Lorsque l'élément de liaison 111 est un câble, l'élément de guidage 112 peut être une gaine de diamètre adapté pour accueillir ledit câble. Une telle gaine est alors relativement souple et possède une flexibilité suffisante pour permettre son arrangement sur l'exosquelette, tout en étant incompressible. De telles gaines sont en soit connues de la technique. La gaine est alors fixée par une première extrémité au module supérieur gauche 200, et par une seconde extrémité au module supérieur droit 300. La gaine étant ainsi solidaire des modules supérieurs 200 et 300, toute rotation de ces derniers par rapport aux modules inférieurs 210 et 310 entraîne également un déplacement du câble, par l'intermédiaire de la gaine. Le câble étant de longueur constante, ce dernier tire sur les éléments de bras de levier 211 et 311, qui à leur tour ont tendance à tendre les organes élastiques 212 et 312. De cette manière, lorsque les modules supérieurs 200 et 300 forment sensiblement un même angle non nul, de signe identique, par rapport aux modules inférieurs 210 et 310, les éléments de bras de levier 211 et 311 sont bloqués en rotation par rapport aux modules supérieurs 200 et 300. les organes élastiques 212 et 312 sont déformés et mis sous tension, entrainant l'application d'un moment de force de compensation sur les modules supérieurs 200 et 300.

En particulier, la gaine est fixée aux modules supérieurs 200 et 300 au niveau de l'extrémité inférieure, et le câble et la gaine passent dans le dos de l'utilisateur afin de ne pas l'entraver dans ses mouvements.

Un avantage de prévoir un élément de guidage 112 sous forme de gaine est de pouvoir guider le câble de manière à ne pas encombrer l'utilisateur, en plus d'améliorer la résistance à l'usure, la sécurité, etc. Il est également possible d'imaginer un élément de liaison 111 qui soit différent d'un câble, tel une sangle, une chaîne, ou même une combinaison d'élément souples et d'éléments rigides.

Alternativement, il est également possible d'imaginer un élément de guidage 112 différent d'une gaine, tel que simplement deux œillets placés respectivement sur les extrémités inférieures des modules supérieurs 200 et 300, dans lesquels passe le câble, qui nécessiterait d'être alors tendu. Le câble est ainsi lié aux modules supérieurs 200 et 300, mais n'est pas protégé et n'est pas guidé dans le dos de l'utilisateur. Toutefois une telle solution n'illustre que d'autres variantes possibles, mais ne présente pas les avantages d'une solution comprenant un élément de guidage souple.

Au vu de ce qui précède, on comprend que la partie droite formée par les modules 300 et 310 et la partie gauche formée par les modules 200 et 210 sont liés par l'ensemble de couplage 110, qui est souple. Ainsi, l'exosquelette 100 n'a pas de largeur prédéfinie et peut s'adapter simplement à la morphologie de l'utilisateur qui le revêt.

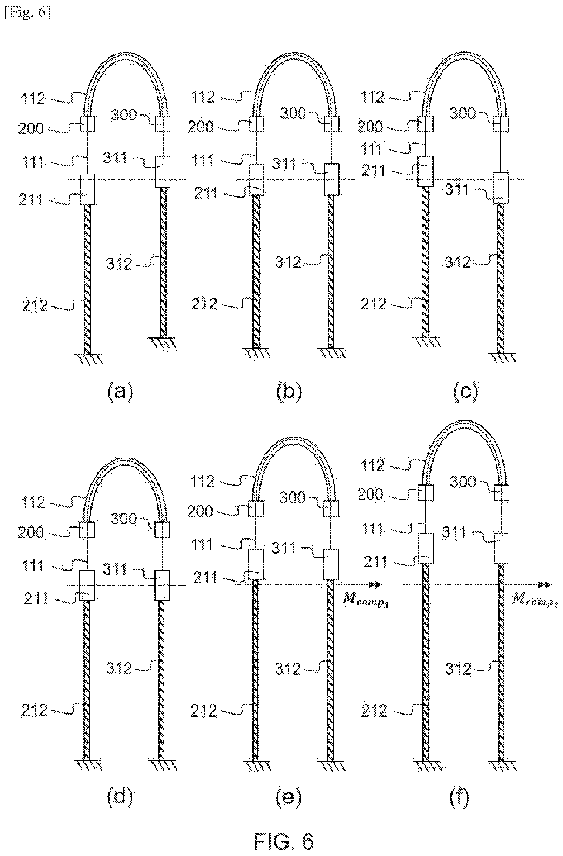

A titre de résumé, la [Fig.6] illustre schématiquement les effets décrits ci-dessus. Les représentations (a) à (c) illustrent une situation de marche de l'utilisateur, tandis que les représentations (d) à (f) représentent une situation dans laquelle l'utilisateur se penche vers l'avant selon un angle plus ou moins important. L'exosquelette est représenté de dos, le câble formant l'élément de liaison 111 étant représenté visible en pointillés à travers la gaine formant l'élément de guidage 112.

Sur la représentation (a), les modules inférieurs 210 et 310 pivotent en contre phase, schématiquement cela peut être résumé par un déplacement vers le « haut » de l'élément de bras de levier d'un premier module inférieur, et un déplacement vers le « bas » de l'élément de bras de levier de l'autre module. L'élément de liaison 111 se déplace dans la gaine en conséquence, sans changer sa longueur. Sur la représentation (b), les modules inférieurs 210 et 310 se trouvent dans une même position angulaire, avant de continuer leur pivotement en contre-phase comme illustré sur la représentation (c), qui est le miroir de la représentation (a). Au cours de ce mouvement, les organes élastiques 212 et 312 ne sont pas déformés et ne se trouvent pas mis sous tensions, les éléments de bras de levier 211 et 311 ainsi que les organes élastiques 212 et 312 suivant le mouvement des membres inférieurs.

Sur la représentation (d), l'utilisateur est debout, au repos, les modules inférieurs et supérieurs sont alignés. Les organes élastiques 212 et 312 ne sont pas tendus. Sur la représentation (e), le tronc 401 de l'utilisateur est penché légèrement vers l'avant, si bien que les modules inférieurs et supérieurs forment sensiblement un même angle *α*₁. Les organes élastiques 212 et 312 sont alors déformés légèrement (ils s'allongent d'une distance approximativement égale au sinus de l'angle *α*₁ multiplié par la longueur d'un élément de bras de levier, dans le mode de réalisation préférentiel de ce mode de réalisation. D'autres comportement peuvent être obtenus par un enroulement de l'élément de liaison 11 autour d'une came, poulie, etc.), se trouvant ainsi sous tension, et appliquant un moment de force de compensation *M*_{*comp*₁} sur les modules supérieurs. Sur la représentation (f), l'utilisateur se penche un peu plus, selon un angle *α₂*, et un moment de force de compensation *M*_{*comp*₂} sur les modules supérieurs est appliqué. On remarque que les organes élastiques 212 et 312 sont tendus car les membres inférieurs sont immobiles, mais que les éléments de bras de levier 211 et 311 sont tirés par l'ensemble de couplage mécanique 110, qui est lié aux modules supérieurs 200 et 300.

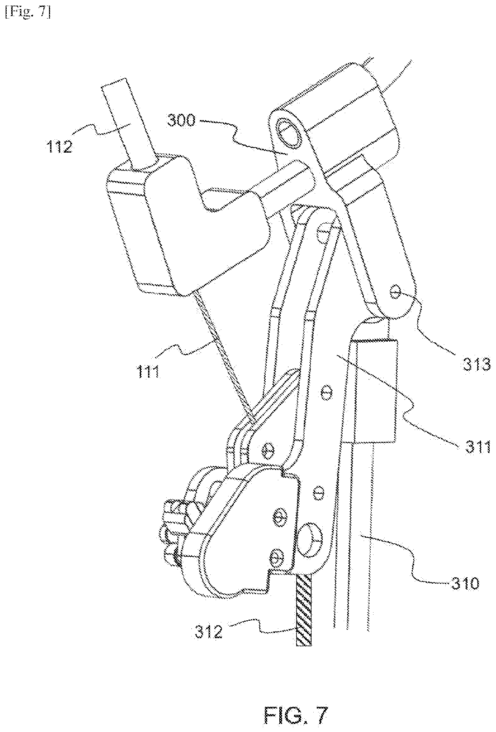

Selon une variante préférentielle, les éléments de bras de levier 211 et 311 prennent la forme de bielles formées de deux plaques disposées en vis-à-vis, comme cela est visible sur la [Fig.7], et comprennent un dispositif de débrayage de l'assistance de l'exosquelette, réalisé de la manière suivante.

Entre les deux plaques est agencée de manière pivotante une biellette 214, respectivement 314. De telles biellettes 214 et 314 peuvent également être formées de deux plaques disposées en vis-à-vis, et reliées par des axes de maintien. On se réfère à nouveau au côté droit, le côté gauche étant sensiblement symétrique au côté droit.

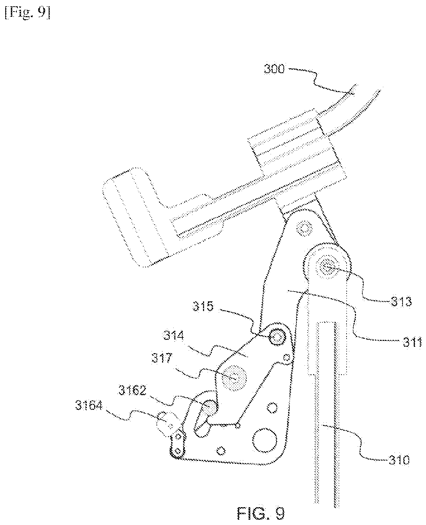

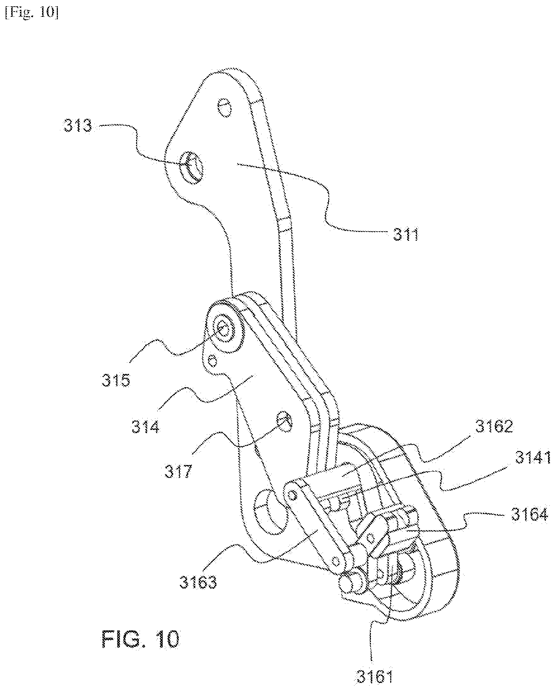

Comme cela est visible sur les figures 9 et 10, sur lesquelles a été retirée l'une des deux plaques de l'élément de bras de levier 311, la biellette 314 est pivotante autour d'un axe 315, distinct du pivot 313.

La biellette 314 est reliée à l'ensemble de couplage mécanique 110, plus précisément à l'élément de liaison 111 au niveau d'un point de fixation 317. La biellette 314 peut être bloquée ou débloquée en rotation par l'intermédiaire d'un loquet de débrayage 316.

Le loquet de débrayage 316 peut par exemple prendre la forme d'une manivelle 3161 pivotante sur l'élément de bras de levier 311, dont la rotation entraîne la translation d'un axe de blocage 3162 par l'intermédiaire d'une biellette de liaison 3163, l'axe de blocage 3162 étant guidé coulissant dans une rainure de l'élément de bras de levier 311. La biellette 314 comporte une extrémité présentant un doigt 3141 bloqué par l'axe de blocage 3162 dans un état couplé de la biellette 314 et de l'élément de bras de levier 311. Lorsque l'axe de blocage 3162 entre en translation, par l'actionnement de la manivelle 3161, présentant préférentiellement une manette 3164 actionnable par l'utilisateur, l'axe de blocage 3162 force une légère rotation de la biellette 314en passant par-dessus le doigt 3141, la biellette 314 et l'élément de bras de levier 311 se trouvant alors dans un état découplé. La biellette 314 peut alors pivoter librement sur l'élément de bras de levier 311, et l'ensemble de couplage mécanique 110 n'est alors plus couplé à l'élément de bras de levier. De cette manière, les organes élastiques 212 et 312 ne sont pas sollicités, quel que soit le mouvement de l'utilisateur, l'exosquelette 100 étant ainsi inactivé.

Avantageusement, un ou plusieurs ressorts sont agencé sur l'élément de bras de levier de façon à être comprimés, ou tendus, selon le type de ressort, lorsque la biellette 314 est bloquée en rotation, entrainant ainsi une légère rotation de la biellette 314 lors de son déblocage, de manière à placer cette dernière dans une position de déblocage distincte de la position de blocage.

Afin de passer aisément la biellette 314 de la position débloquée à la position bloquée, il est possible de prévoir une lanière reliée à la biellette 314, sur laquelle l'utilisateur peut tirer, verrouillant le loquet de débrayage 316.

Selon un mode de réalisation particulier, les parties supérieures 200 et 300 sont liées à l'utilisateur au moyen d'un harnais reliant les modules supérieurs droit 300 et gauche 200. Un tel harnais peut par exemple être en forme de U, avec des branches reposant sur les épaules de l'utilisateur, reliées dans le dos de l'utilisateur. De cette manière, le harnais repose sur les épaules et la partie haute du dos de l'utilisateur. Toutefois, ce harnais n'a pas vocation à transmettre d'efforts significatifs, l'utilisateur travaillant contre les modules supérieurs, et inversement, les modules supérieurs étant ainsi plaqués contre le tronc 401, sans nécessiter de liaison particulière avec le tronc. En d'autres termes, il suffirait que les extrémités supérieures des modules supérieurs 200 et 300 reposent sur le tronc 401 de l'utilisateur, par l'intermédiaire de coussinets par exemples, toutefois un harnais comme décrit précédemment permet un meilleur maintien, sans risque de déplacement de l'exosquelette, procurant une meilleure sécurité du système. Bien entendu, le harnais peut être rembourré pour plus de confort. Également, il est possible de prévoir une sangle avec une boucle de fermeture, reliant les deux modules supérieurs par l'avant, comme cela est visible sur les figures 1 à 3.

De même, au niveau des extrémités inférieures des modules inférieurs 210 et 310, des coussinets d'appui et/ou des brassards ou sangles de liaison aux membres inférieurs 402 et 403 peuvent être prévus, de façon à ce que les modules inférieurs 210 et 310 puissent suivre le mouvement des membres inférieurs 402 et 403.

L'élément de liaison transversal mentionné plus en amont prend avantageusement la forme d'une ceinture pelvienne reliée aux modules supérieurs et inférieurs au niveau des points de pivot 213 et 313. Plus précisément, la ceinture pelvienne est reliée auxdits modules par des liaisons pivots coaxiales avec les points de pivots 213 et 313, de façon à suivre les mouvements de l'utilisateur, augmentant ainsi le confort d'utilisation. Une telle ceinture peut prendre la forme d'une sangle, rembourrée ou non, munie d'une ou plusieurs boucles de fermeture et/ou d'ajustement, afin d'adapter l'exosquelette 100 à différentes morphologies d'utilisateurs, notamment en ce qui regarde le tour de taille. Tout autre élément de liaison, autre qu'une ceinture pelvienne, peut être envisagé, pourvu qu'il relie les parties droite et gauche de l'exosquelette au niveau des points de pivots, et qu'il permette un support, au moins partiel, de l'exosquelette au niveau de la taille de l'utilisateur.

L'utilisation de sangles textiles, pour le harnais et la ceinture pelvienne notamment, procure à l'exosquelette 100 une grande flexibilité, tant en torsion du tronc, qu'en flexion latérale.

L'exosquelette 100 présente avantageusement un moyen de réglage de l'angle de départ de l'assistance. Un tel moyen de réglage peut être formé au niveau de l'extrémité inférieure des modules supérieurs 200 et 300. Comme cela est visible sur les figures, l'extrémité à laquelle est fixé l'élément de liaison 111 peut prendre la forme d'un embout dans lequel est logé l'élément de guidage 112, comportant un taraudage fileté, l'embout étant vissé sur une extrémité filetée de la tige formant un module supérieur. De cette manière, la position axiale de l'embout peut être variée, et vissant/dévissant plus ou moins l'embout. Ce réglage a pour effet de faire varier la distance entre la sortie de l'élément de guidage 112 et l'axe 317 (respectivement 217 pour l'autre côté). L'élément de guidage 112 étant sensiblement incompressible, l'élément de liaison 111 est mis sous tension lorsque la distance entre la sortie de l'élément de guidage 112 et l'axe 317 augmente.

Ainsi, lorsque l'embout est positionné de façon à augmenter la distance entre la sortie de l'élément de guidage 112 et l'axe 317, c'est à dire à tendre l'élément de liaison 111, alors l'angle à partir duquel l'assistance est déclenchée se rapproche de zéro, c'est-à-dire que l'assistance est déclenchée même lors de mouvements de faible amplitude. Au contraire, lorsque l'embout est positionné de façon à minimiser la distance entre la sortie de l'élément de guidage 112 et l'axe 317, c'est à dire à détendre l'élément de liaison 111, alors l'angle à partir duquel l'assistance est déclenchée s'éloigne de zéro, c'est-à-dire que l'assistance est déclenchée que lors de mouvements de relativement grande amplitude. De cette façon, un réglage de l'angle de départ de l'assistance est obtenu.

Enfin, un moyen de réglage en hauteur de l'exosquelette 100 peut être prévu. Un tel moyen de réglage peut par exemple être compris au niveau des modules supérieurs 200 et 300. A la place de tige formant la structure de ces derniers, il est possible de prévoir un agencement de tiges coulissant dans des tubes, permettant d'ajuster la hauteur du point de liaison de l'exosquelette avec le tronc de l'utilisateur.

Il n'est pas nécessairement utile de prévoir un verrouillage de ce moyen de réglage, car il peut être avantageux de laisser les tiges coulisser librement lors de l'utilisation de l'exosquelette, permettant ainsi de compenser des déformations du tronc de l'utilisateur, notamment si ce dernier courbe son dos par exemple. On rappelle qu'avantageusement l'exosquelette 100 est lié au tronc de l'utilisateur par l'intermédiaire d'un harnais, ce qui réduit donc tout risque de décalage imprévu de l'exosquelette sur le tronc, permettant de se dispenser de tout organe de verrouillage. Bien entendu, un tel organe optionnel peut être malgré tout prévu. Exemple d'un deuxième mode de réalisation particulier

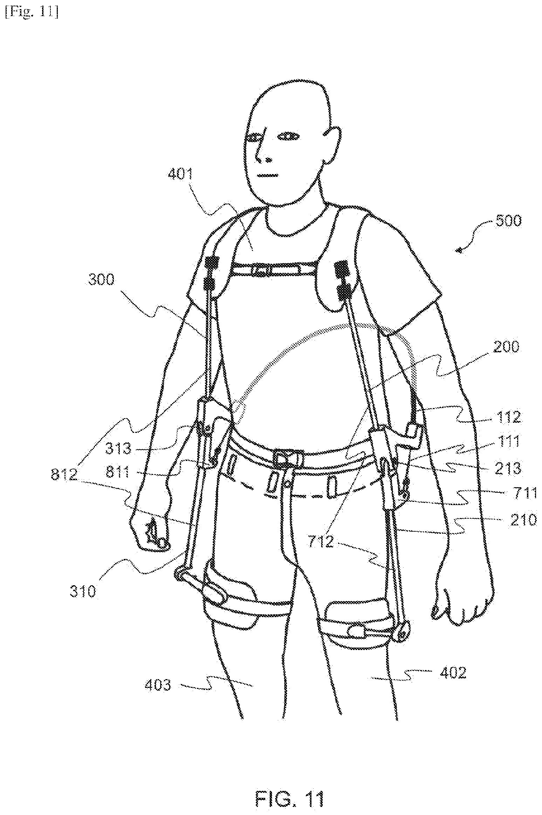

La [Fig.11] représente un utilisateur portant un exosquelette 500 de tronc selon un deuxième mode de réalisation, dans un état de repos, dans lequel l'exosquelette est dans un état « inactif » et ne procure aucune assistance à l'utilisateur.

L'exosquelette 500 de ce deuxième mode de réalisation présente sensiblement la même structure que l'exosquelette 100 du premier mode de réalisation, c'est pourquoi seules les différences seront exposées par la suite. En particulier, le fonctionnement et la structure de l'ensemble de couplage sont sensiblement identiques. On désigne par les mêmes références les éléments communs ou sensiblement identique.

Les modules supérieurs 200 et 300 ne se différencient pas structurellement de ceux de l'exosquelette 100, toutefois les tiges formant mâts de support présentent une flexibilité leur conférant des propriétés de ressort type ressort à lame, au contraire des tiges de l'exosquelette 100, qui sont sensiblement rigides.

Les modules inférieurs 210 et 310 sont constitués pour leur majeure partie de tiges formant mâts de supports, comme pour l'exosquelette 100, ces tiges possédant également des propriétés de ressort type ressort à lame.

A titre d'exemple, les tiges sont formées en matériau composite tel de la fibre de verre.

Les modules inférieurs 210 et 310 ne comportent pas d'élément de bras de levier, mais un bras 711, respectivement 811, saillant sensiblement transversalement, à l'extrémité duquel est fixé une extrémité de l'élément de liaison 111, l'élément de liaison relie ainsi directement les deux modules inférieurs. Le bras saillant peut être formé directement sur la tige, ou sur un embout fixé sur la tige. Lorsque l'exosquelette comprend un dispositif de débrayage, le bras saillant peut être verrouillé dans sa position saillante, ou débrayé de façon à pouvoir pivoter librement. En d'autres termes, le bras saillant peut être réalisé sous la forme d'une biellette agencée pivotante sur le module inférieur, selon un mode de réalisation réalisé mutatis mutandis à partir du dispositif de débrayage du premier mode de réalisation décrit en amont.

Les mâts de supports des modules supérieurs 200 et 300 sont liés aux points de pivots au niveau d'une extrémité inférieure, mais ne sont ici pas directement coudés, car aucun bras de levier n'est nécessaire. Seul un bras transversal, formé par exemple sur une chape de fixation au point de pivot, sert ici de point de fixation de l'élément de guidage 112 au niveau de l'extrémité inférieure.

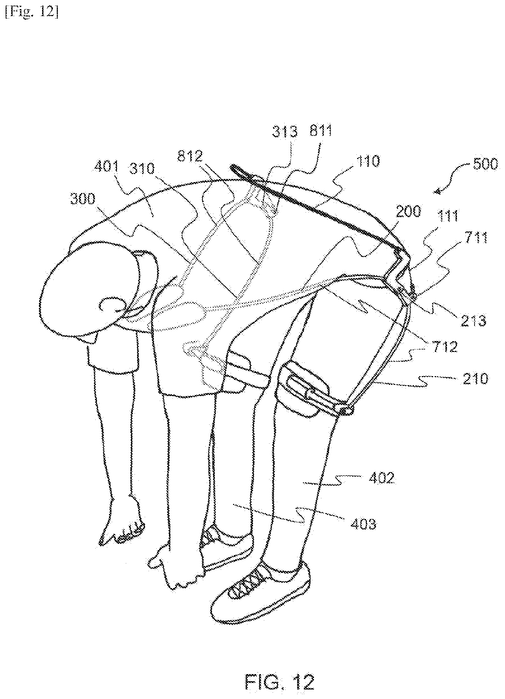

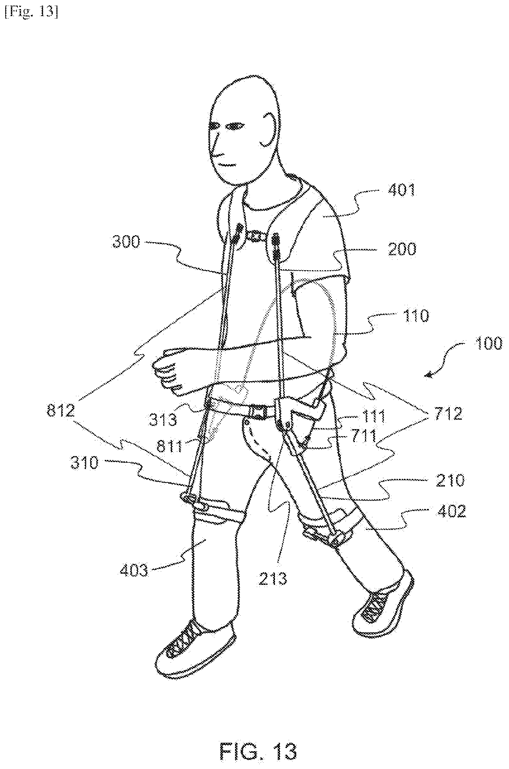

Les figures 12 et 13 illustrent respectivement l'utilisateur dans une posture de travail et de marche.

Il est visible à la [Fig.12] que, dans ce deuxième mode de réalisation, les tiges des modules supérieurs 200 et 300 et inférieur 210 et 310 sont pliées et sous tension, et jouent le rôle de ressorts de type ressort à lame. Plus précisément, chaque couple de tige de module supérieur -- tige de module inférieur joue le rôle d'un ressort de type ressort à lame, les tiges d'un tel couple étant verrouillées en rotation et se comportent comme une seule longue tige flexible. En d'autres termes, ce mode de réalisation comprend deux actionneurs élastiques 712 et 812 formés par les mâts de support des modules supérieurs et inférieurs.

Sur la [Fig.13], il est visible que grâce à l'ensemble de coulage, les modules inférieurs 210 et 310 peuvent pivoter librement en contre phase, les tiges d'un couple de tiges se comportant alors comme deux éléments articulés, sans être pliées, l'exosquelette ne procurant alors sensiblement aucune assistance.

Par ailleurs, tous les éléments additionnels tels que la ceinture pelvienne, le harnais ou tout autre élément décrit plus en amont peuvent être avantageusement implémentés sur l'exosquelette 500.

Il apparaît donc très clairement que dans le cadre de la présente invention, l'ensemble de couplage conserve sensiblement la même structure et le même fonctionnement quel que soit le type d'actionneur élastique choisi, et quel que soit son agencement. Les modes de réalisations préférentiels décrits ci-dessus présentent deux alternatives de réalisation de l'invention, avec deux types de structure et d'agencements d'actionneurs différents, étant entendu que toute autre solution d'actionneur peut être envisagée et est couverte par la présente invention.

## Revendications

1. Exosquelette (100, 500) de tronc comportant :
• une partie supérieure (200, 300) apte à être liée au tronc (401) d'un utilisateur de l'exosquelette,
• une paire de modules inférieurs (210, 310) étant aptes à être liés chacun à un membre inférieur (402, 403) de l'utilisateur, chaque module inférieur étant relié à la partie supérieure par un point de pivot (213, 313) distinct situé à hauteur des hanches de l'utilisateur,
• au moins un actionneur élastique (212, 312, 712, 812) configuré pour exercer, lorsqu'il est sous tension, un moment de force de compensation sur le tronc de l'utilisateur,
• un ensemble de couplage (110) mécanique configuré pour :
• dans une posture de travail de l'utilisateur, entraîner une mise sous tension de l'au moins un actionneur élastique lorsque les modules inférieurs forment sensiblement un même angle non nul avec la partie supérieure, l'exosquelette procurant alors une assistance, et
• dans une posture de marche de l'utilisateur, autoriser un libre pivotement en contre-phase des modules inférieurs, sans que l'exosquelette ne procure d'assistance,
**caractérisé en ce que** l'ensemble de couplage comporte :
• un élément de liaison (111) couplant les modules inférieurs entre eux,
• un élément de guidage (112) de l'élément de liaison, fixé à la partie supérieure, couplant les modules inférieurs à la partie supérieure par l'intermédiaire de l'élément de liaison,
l'élément de liaison et l'élément de guidage étant souples.

2. Exosquelette (100, 500) selon la revendication 1, dans lequel ledit élément de liaison (111) souple est un élément longiforme sensiblement sans capacité de déformation élastique, et dans lequel ledit élément de guidage (112) souple est un élément longiforme sensiblement incompressible.

3. Exosquelette (100, 500) selon la revendication 2, dans lequel ledit élément de liaison (111) souple est un câble, et dans lequel l'élément de guidage (112) souple est une gaine de diamètre adapté pour accueillir ledit câble.

4. Exosquelette (100, 500) selon l'une quelconque des revendications 1 à 3. dans lequel la partie supérieure (200, 300) comprend une paire de mâts de support, chaque mât de support comportant sur une extrémité inférieure un point de fixation dudit élément de guidage (112), et étant relié audit point de pivot correspondant (213, 313) au niveau de ladite extrémité inférieure, et comportant au niveau d'une extrémité supérieure un moyen de liaison au tronc de l'utilisateur

5. Exosquelette (100, 500) selon l'une quelconque des revendications 1 à 4, dans lequel l'exosquelette comporte en outre une ceinture pelvienne fixée au niveau desdits points de pivots (213, 313).

6. Exosquelette (100, 500) selon l'une quelconque des revendications 1 à 5, dans lequel la partie supérieure est formée de deux modules supérieurs (200, 300) indépendants couplés par ledit élément de guidage (112).

7. Exosquelette (100, 500) selon la revendication 6, dans lequel lesdits modules supérieurs (200, 300) sont liés au tronc (401) de l'utilisateur au moyen d'un harnais reliant les modules supérieurs indépendants, le harnais étant en forme de U dont les branches reposent sur les épaules de l'utilisateur et sont reliées dans le dos de l'utilisateur.

8. Exosquelette (100) selon l'une quelconque des revendications 1 à 7, chaque module inférieur (210, 310) comportant un actionneur élastique (212, 312), et dans lequel chaque module inférieur comprend
• un mât de support reliée par une extrémité supérieure audit point de pivot (213, 313), et comportant au niveau d'une extrémité inférieure un moyen de liaison à un membre inférieur de l'utilisateur,
• un élément de bras de levier (211, 311) monté pivotant sur ledit point de pivot par une première extrémité, et dont une seconde extrémité est reliée à l'élément de liaison (111), et
ledit actionneur élastique d'un module inférieur étant un organe sollicité en traction, s'étendant entre la seconde extrémité de l'élément de bras de levier et l'extrémité inférieure dudit mât de support du module inférieur.

9. Exosquelette (100) selon la revendication 8, dans lequel l'organe élastique (212, 312) d'un module inférieur est un choisi parmi : un câble élastique, une sangle élastique, un ressort hélicoïdal, un ressort à gaz, un ressort hydraulique.

10. Exosquelette (500) selon l'une quelconque des revendications 1 à 7 et la revendication 4, comportant deux actionneurs élastiques (712, 812), dans lequel
• chaque module inférieur (210, 310) comprend un mât de support reliée par une extrémité supérieure audit point de pivot, et comportant au niveau d'une extrémité inférieure un moyen de liaison à un membre inférieur de l'utilisateur,
• chaque extrémité de l'élément de liaison (111) relie directement le mât de support d'un module inférieur,
et dans lequel chaque couple de mât de support de module inférieur - mât de support de module supérieur forme un actionneur élastique sollicité en flexion dans ladite posture de travail.

11. Exosquelette (500) selon la revendication 10, dans lequel lesdits mâts de support des modules inférieurs et supérieurs sont des tiges flexibles en matériau composite.

12. Exosquelette (100, 500) selon l'une quelconque des revendications 1 à 11, comportant en outre au moins un dispositif de débrayage, configuré pour coupler/découpler un module inférieur (210, 310) de l'ensemble de couplage mécanique (110).

13. Exosquelette (100, 500) selon la revendication 12, dans lequel ledit dispositif de débrayage comporte :
• une biellette (214, 314) agencée pivotante sur ledit module inférieur, ladite biellette étant reliée à l'élément de liaison, et
• un loquet de débrayage (216, 316), permettant de bloquer ou débloquer le pivotement de ladite biellette par rapport au module inférieur (210, 310),
de manière à coupler ou découpler ledit ensemble de couplage (110) mécanique dudit module inférieur.

14. Exosquelette selon la revendication 1, dans lequel l'élément de guidage (112) est compressible, et forme un actionneur élastique sollicité en compression dans ladite posture de travail.

## Patentansprüche

1. Rumpfexoskelett (100, 500) umfassend:
• einen oberen Teil (200, 300), der mit dem Rumpf (401) eines Benutzers des Exoskeletts verbunden werden kann,
• ein Paar unterer Module (210, 310), die jeweils mit einer unteren Gliedmaße (402, 403) des Benutzers verbunden werden können, wobei jedes untere Modul mit dem oberen Teil durch einen separaten Drehpunkt (213, 313) verbunden ist, der sich in Höhe der Hüften des Benutzers befindet,
• mindestens ein elastischer Aktuator (212, 312, 712, 812), der so eingerichtet ist, dass er, wenn er unter Spannung steht, ein Kompensationskraftmoment auf den Rumpf des Benutzers ausübt,
• eine mechanische Kupplungsbaugruppe (110), die so eingerichtet ist, dass sie:
• in einer Arbeitshaltung des Benutzers das unter Spannung stellen des mindestens einen elastischen Aktuators bewirkt, wenn die unteren Module im Wesentlichen einen gleichen Winkel ungleich Null mit dem oberen Teil bilden, wobei das Exoskelett dann Unterstützung bietet, und
• in einer Laufhaltung des Benutzers ein freies gegenphasiges Drehen der unteren Module zulässt, ohne dass das Exoskelett Unterstützung bietet, **dadurch gekennzeichnet, dass** die Kupplungsbaugruppe Folgendes umfasst:
• ein Verbindungselement (111), das die unteren Module miteinander koppelt,
• ein am oberen Teil befestigtes Führungselement (112) des Verbindungselements, das die unteren Module über das Verbindungselement mit dem oberen Teil koppelt,
wobei das Verbindungselement und das Führungselement flexibel sind.

2. Exoskelett (100, 500) nach Anspruch 1, wobei das flexible Verbindungselement (111) ein im Wesentlichen längliches Element ohne elastische Verformungsfähigkeit ist, und wobei das flexible Führungselement (112) ein im Wesentlichen unkomprimierbares längliches Element ist.

3. Exoskelett (100, 500) nach Anspruch 2, wobei das flexible Verbindungselement (111) ein Kabel ist, und wobei das flexible Führungselement (112) eine Hülle mit einem geeigneten Durchmesser zur Aufnahme des Kabels ist.

4. Exoskelett (100, 500) nach einem der Ansprüche 1 bis 3, wobei der obere Teil (200, 300) ein Paar Stützmasten umfasst, jeder Stützmast weist an einem unteren Ende einen Befestigungspunkt des Führungselements (112) au und ist mit dem entsprechenden Drehpunkt (213, 313) an dem unteren Ende verbunden und weist an einem oberen Ende ein Mittel zur Verbindung mit dem Rumpf des Benutzers auf.

5. Exoskelett (100, 500) nach einem der Ansprüche 1 bis 4, wobei das Exoskelett ferner einen Beckengurt aufweist, der an den besagten Drehpunkten (213, 313) befestigt ist.

6. Exoskelett (100, 500) nach einem der Ansprüche 1 bis 5, wobei der obere Teil aus zwei unabhängigen oberen Modulen (200, 300) gebildet ist, die durch das Führungselement (112) gekoppelt sind.

7. Exoskelett (100, 500) nach Anspruch 6, wobei die oberen Module (200, 300) mit einem Gurt, der die unabhängigen oberen Module verbindet, mit dem Rumpf (401) des Benutzers verbunden sind, wobei der Gurt U-förmig ist, wobei die Bügel der U-form auf den Schultern des Benutzers aufliegen und im Rücken des Benutzers verbunden sind.

8. Exoskelett (100) nach einem der Ansprüche 1 bis 7, wobei jedes untere Modul (210, 310) einen elastischen Aktuator (212, 312) aufweist, und wobei jedes untere Modul Folgendes aufweist
• einen Stützmast, der durch ein oberes Ende mit diesem Drehpunkt (213, 313) verbunden ist und an einem unteren Ende ein Verbindungsmittel mit einer unteren Gliedmaße des Benutzers aufweist,
• ein Hebelarmelement (211, 311), das über ein erstes Ende an dem Drehpunkt schwenkbar montiert ist, und dessen zweites Ende mit dem Verbindungselement (111) verbunden ist, und
wobei der elastische Aktuator eines unteren Moduls ein auf Zug beanspruchtes Element ist, das sich zwischen dem zweiten Ende des Hebelarmelements und dem unteren Ende des Stützmasts des unteren Moduls erstreckt.

9. Exoskelett (100) nach Anspruch 8, wobei das elastische Element (212, 312) eines unteren Moduls ausgewählt ist aus: einem elastischen Kabel, einem elastischen Riemen, einer Schraubenfeder, einer Gasfeder, einer Hydraulikfeder.

10. Exoskelett (500) nach einem der Ansprüche 1 bis 7 und Anspruch 4, das zwei elastische Aktuatoren (712, 812) umfasst, wobei
• jedes untere Modul (210, 310) einen Stützmast umfasst, der durch ein oberes Ende mit diesem Drehpunkt verbunden ist, und an einem unteren Ende ein Verbindungsmittel mit einer unteren Gliedmaße des Benutzers aufweist,
• jedes Ende des Verbindungselements (111) verbindet direkt den Stützmast eines unteren Moduls,
und wobei jedes Paar aus unterem Modulstützmast - oberem Modulstützmast einen in besagter Arbeitshaltung biegebeanspruchten elastischen Aktuator bildet.

11. Exoskelett (500) nach Anspruch 10, wobei die Stützmasten der unteren und oberen Module flexible Stäbe aus Verbundmaterial sind.

12. Exoskelett (100, 500) nach einem der Ansprüche 1 bis 11, ferner umfassend mindestens eine Ausrückvorrichtung, eingerichtet zum Kuppeln/Entkuppeln eines unteren Moduls (210, 310) von der mechanischen Kupplungsbaugruppe (110).

13. Exoskelett (100, 500) nach Anspruch 12, wobei die Ausrückvorrichtung Folgendes umfasst:
• eine an dem unteren Modul schwenkbar angeordnete Verbindungsstrebe (214, 314), wobei die Verbindungsstrebe mit dem Verbindungselement verbunden ist, und
• eine Ausrückklinke (216, 316), mit der die Schwenkung der besagten Strebe in Bezug auf das untere Modul (210, 310) blockiert oder entriegelt werden kann,
so, dass die besagte mechanische Kupplungsbaugruppe (110) mit dem besagten unteren Modul gekoppelt oder entkoppelt wird.

14. Exoskelett nach Anspruch 1, wobei das Führungselement (112) komprimierbar ist und einen in der Arbeitshaltung kompressionsbeanspruchten elastischen Aktuator bildet.

## Claims

1. A trunk exoskeleton (100, 500) including:
• an upper part (200, 300) capable of being linked to the trunk (401) of a user of the exoskeleton,
• a pair of lower modules (210, 310) each capable of being linked to a lower limb (402, 403) of the user, each lower module being connected to the upper part by a separate pivot point (213, 313) located at the user's hips,
• at least one elastic actuator (212, 312, 712, 812) configured to exert, when turned on, a compensating force moment on the user's trunk,
• a mechanical coupling assembly (110) configured to:
• in a working posture of the user, cause the at least one elastic actuator to be turned on when the lower modules substantially form a same non-zero angle with the upper part, the exoskeleton then providing assistance, and
• in a walking posture of the user, allow free counter-phase pivoting of the lower modules, without the exoskeleton providing assistance,
**characterized in that** the coupling assembly includes:
• a linking element (111) coupling the lower modules together,
• a guide element (112) for the linking element, attached to the upper part, coupling the lower modules to the upper part via the linking element,
the linking element and the guide element being flexible.

2. The exoskeleton (100, 500) according to claim 1, wherein said flexible linking element (111) is an elongate element with substantially no elastic deformation capacity, and wherein said flexible guide element (112) is a substantially incompressible elongate element.

3. The exoskeleton (100, 500) according to claim 2, wherein said flexible linking element (111) is a cable, and wherein said flexible guide element (112) is a sheath with a diameter adapted to accommodate said cable.

4. The exoskeleton (100, 500) according to any one of claims 1 to 3, wherein the upper part (200, 300) comprises a pair of support posts, each support post including on a lower end an attachment point for said guide element (112), and being connected to said corresponding pivot point (213, 313) at said lower end, and including at an upper end a means of linking to the trunk of the user

5. The exoskeleton (100, 500) according to any one of claims 1 to 4, wherein the exoskeleton further includes a pelvic girdle attached at said pivot points (213, 313).

6. The exoskeleton (100, 500) according to any one of claims 1 to 5, wherein the upper part is formed of two independent upper modules (200, 300) coupled by said guide element (112).

7. The exoskeleton (100, 500) according to claim 6, wherein said upper modules (200, 300) are linked to the trunk (401) of the user by means of a harness connecting the independent upper modules, the harness being U-shaped, the arms of which rest on the shoulders of the user and are connected in the back of the user.

8. The exoskeleton (100) according to any one of claims 1 to 7, each lower module (210, 310) including an elastic actuator (212, 312), and wherein each lower module comprises
• a support post connected by an upper end to said pivot point (213, 313), and including at a lower end a means of connecting to a lower limb of the user,
• a lever arm element (211, 311) pivotably mounted to said pivot point by a first end, and a second end of which is connected to the linking element (111), and
said elastic actuator of a lower module being a tensionally loaded member, extending between the second end of the lever arm element and the lower end of said support post of the lower module.

9. The exoskeleton (100) according to claim 8, wherein the elastic member (212, 312) of a lower module is one selected from: an elastic cable, an elastic strap, a coil spring, a gas spring, a hydraulic spring.

10. The exoskeleton (500) according to any one of claims 1 to 7 and claim 4, comprising two elastic actuators (712, 812), wherein
• each lower module (210, 310) comprises a support post connected by an upper end to said pivot point, and including at a lower end a means of connecting to a lower limb of the user,
• each end of the linking element (111) directly connects the support post of a lower module,
and wherein each lower module support post - upper module support post pair forms an elastic actuator flexurally loaded in said working posture.

11. The exoskeleton (500) according to claim 10, wherein said support posts of the lower and upper modules are flexible rods of composite material.

12. The exoskeleton (100, 500) according to any one of claims 1 to 11, further comprising at least one disengagement device, configured to couple/decouple a lower module (210, 310) of the mechanical coupling assembly (110).

13. The exoskeleton (100, 500) according to claim 12, wherein said disengagement device includes:
• a connecting rod (214, 314) pivotably arranged on said lower module, said connecting rod being connected to the linking element, and
• a disengagement latch (216, 316), for blocking or unblocking pivoting of said connecting rod with respect to the lower module (210, 310),
so as to couple or decouple said mechanical coupling assembly (110) of said lower module.

14. The exoskeleton according to claim 1, wherein the guide element (112) is compressible, and forms an elastic actuator compressively loaded in said working posture.
